# EUROPÄISCHE PATENTSCHRIFT

(11) **EP 2 589 281 B1**
(45) Veröffentlichungstag und Bekanntmachung des Hinweises auf die Patenterteilung: **16.05.2018**
(21) Anmeldenummer: 12401218.8
(22) Anmeldetag: 01.11.2012
(51) Int. Cl.: A01B 15/10

(54) **Pflugkörper mit einem Streichblech**
Plough body with a mouldboard
Corps de charrue avec un versoir de charrue

(30) Priorität: 04.11.2011 DE 102011055034
(43) Veröffentlichungstag der Anmeldung: 08.05.2013
(73) Patentinhaber: Amazonen-Werke H. Dreyer GmbH & Co. KG, 49205 Hasbergen (DE)
(72) Erfinder: Laumann, Bernhard, 48477 Hörstel - Riesenbeck (DE); Resch, Rainer, 49170 Hagen a TW (DE)

(56) Entgegenhaltungen:
- EP-B1- 1 586 229
- WO-A1-01/50834
- WO-A2-2008/000989
- DE-A1- 3 318 159
- DE-U1-202011 002 801
- US-A- 2 217 888

## Beschreibung

Die Erfindung bezieht sich auf einen Pflugkörper mit einem Streichblech in Streifenkörperausbildung, das mittels zweier beabstandet zueinander angeordneter, am Streichblech angeklebten Befestigungselemente an einem Pflugtragkörper gehaltert ist.

Ein Pflugkörper mit einem Streichblech der eingangs genannten Art ist aus der EP 1 586 229 B1 bekannt. Bei dem in diesem Dokument offenbarten Pflugkörper sind Streichbleche vorgesehen, die als Vollkörperbleche oder als Einzelstreichblechstreifen ausgebildet sein können und an einem Pflugtragkörper über jeweils ein Formelement festgelegt sind, das jeweils mit einer Vollfläche eines Streichbleches zu verkleben ist. Das Streichblech soll dabei eine homogene Einheit sein, das nicht durch Schrauben oder dergleichen Befestigungsmittel geschwächt ist. Das jeweilige Formelement hat zur weiteren Befestigung mit dem Pflugtragkörper jedoch eine Gewindebohrung oder eine in das Formelement eingelassene Senkschraube, so dass dieses mit dem Streichblech über die Schraubverbindung an dem Pflugtragkörper festzulegen ist.

US 2 217 888 A offenbart einen Pflugkörper mit einem Streichblech in Streifenkörperausführung. Da ein Streichblech in dem Bereich, in dem das Formelement mit dem Streichblech verklebt ist, einen erhöhten Verschleiß aufweist, ist dieses in diesem Bereich besonders hart ausgebildet. Durch die Verbindung des Formelementes mit dem Pflugtragkörper mittels der Schraubverbindung ist bei dieser Art der Befestigung jedoch eine keine Bewegung des Streichbleches zulassende, klapperfreie Befestigung des Streichbleches an dem Pflugtragkörper nicht möglich. Das gleiche gilt für in Aussparungen einzuhakende Hakenverbindungen, die alternativ in der Praxis bekannt geworden sind.

Es ist daher Aufgabe der vorliegenden Erfindung, einen Pflugkörper der eingangs genannten Art mit möglichst geringem zusätzlichem Aufwand zu schaffen, bei dem eine möglichst keine freie Relativbewegung des Streichbleches zulassene Halterung eines eine große Härte aufweisenden Streichbleches am Pflugtragkörper ermöglicht ist.

Zur Lösung dieser Aufgabe zeichnet sich der Pflugkörper der eingangs genannten Art dadurch aus, dass Befestigungsmittel Schwingungsdämpfer aufweisen und dass das Streichblech unter Zwischenlage dieser Schwingungsdämpfer an dem Pflugtragkörper festgelegt ist. Damit ist das Streichblech über eine Art der Befestigung am Pflugtragkörper festzulegen, die keine freien Relativbewegungen zwischen Streichblech und Pflugtragkörper auch bei höheren Pfluggeschwindigkeiten und damit größerer Beanspruchung zulässt. Damit ist eine verschleißarme und somit auch klapperfreie Halterung des Streichbleches an dem Pflugtragkörper möglich, wobei diese Vorteile sich gleichermaßen bei Streichblechen auswirken, die als Vollstreichbleche oder als Einzelstreichblechstreifen ausgebildet sind.

Der Schwingungsdämpfer ist ein relativ einfach bauendes Bauteil und kann mit einem nur geringen Montageaufwand bei der Befestigung des jeweiligen Streichbleches vorgesehen sein. So bieten sich bereits als Schwingungsdämpfer einfache Federelemente an, die z.B. unter der Mutter einer Schraubverbindung angeordnet werden. Ebenfalls ist es möglich, z.B. Zwischenschichten aus einem elastischen Material bei der Befestigung vorzusehen oder auch beispielsweise federnde Blöcke, die aus einem elastischen Material bestehen und die beispielsweise ein Anschlussteil aufnehmen, das Teil des Befestigungselementes ist.

Solche Ausgestaltungen der Befestigungsvarianten sind Gegenstand von Unteransprüchen als Weiterbildungen der vorliegenden Erfindung, auf die hiermit ausdrücklich verwiesen wird. Diese sind auch in den zeichnerischen Beispielen noch näher veranschaulicht.

Zur weiteren Erläuterung der Erfindung wird daher auf die nachfolgende Beschreibung und die Zeichnung verwiesen. In der Zeichnungen zeigen:
- Fig. 1: eine perspektivische Darstellung eines Streichbleches in Streifenkörperausbildung, das an einem Pflugtragkörper gehaltert ist mit Darstellung einer Scharspitze und eines Scharblattes;
- Fig. 2: eine Querschnittsdarstellung des Ausführungsbeispiels nach Fig. 1 entlang der Schnittlinie II-II in Fig. 1, und
- Fig. 3: eine zu Fig. 2 analoge Darstellung einer alternativen Ausführungsvariante einer Art der Befestigung eines Streichbleches mit zwischengeschaltetem Schwingungsdämpfer.

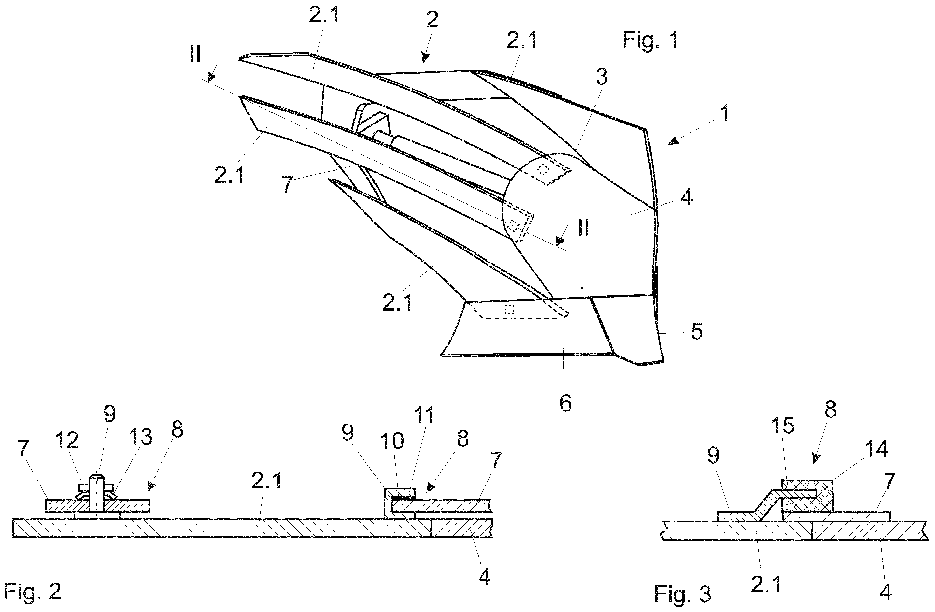

In der Zeichnung sind grundsätzlich übereinstimmende Teile mit übereinstimmenden Bezugsziffern versehen. Allgemein mit 1 ist der Pflugkörper beziffert, der ein Streichblech 2 aufweist, das in dem gezeigten Ausführungsbeispiel nach Fig. 1 Einzelblechstreifenkörper 2.1 aufweist mit einer vorderen Ausnehmung 3, in die ein Streichblechvorderteil 4 als auswechselbares Verschleißteil eingesetzt ist, so dass das Streichblech 2 aus einem Streichblechvorderteil 4 und einem Streichblechhinterteil in Gestalt der Einzelstreichblechstreifenkörper 2.1 besteht. An das Streichblech 2 unter Einschluss seines Streichblechvorderteiles 4 schließt sich eine Scharspitze 5 und ein Scharblatt 6 an. Die Einzelstreichblechstreifenkörper 2.1 und das Streichblechvorderteil 4 sind an einem allgemein mit 7 bezifferten Pflugtragkörper befestigt, und zwar über die allgemein mit 8 bezifferten Elemente 8.

In der Ausführungsvariante nach Fig. 2 ist die Art der Befestigung im vorderen Teil des Einzelstreichblechstreifens 2.1 dargestellt, der besonders hart auszubilden ist (in Fig. 2 in Draufsicht rechter Bereich). In diesem Bereich ist das Befestigungselement 8 mit einem Anschlussstück 9 vorgesehen, das schuhartig mit einem im wesentlichen U-förmigen Querschnitt ausgebildet ist, und das mit dem Einzelstreichblechstreifenkörper 2.1 verklebt ist, ohne dass in diesem Bereich sonstige Formelemente in Gestalt von Bohrungen, Schraubelementen und dgl. vorgesehen sind. In die dadurch gebildete Ausnehmung 10 greift ein Ende in Gestalt eines Befestigungsansatzes des Pflugtragkörpers 7 ein, und zwar unter Zwischenlage des Schwingungsdämpfers 11, der bei dieser Ausführungsvariante der Art der Befestigung durch eine elastische Zwischenschicht dargestellt ist.

Links in der Fig. 2 ist eine Ausführungsvariante der Art der Befestigung des Streichbleches 2 dargestellt, also in einem Bereich, der im hinteren Bereich des Streichbleches 2 gelegen ist und somit weniger beansprucht ist als der vordere Bereich eines Streichbleches 2 während der Pflugarbeit. Dieser Bereich des Streichbleches 2 ist mithin weniger hart und somit elastischer auszubilden. Gleichwohl ist auch hier ein Anschlussstück 9 vorgesehen in Gestalt einer mit einem Gewinde versehenen Schraube, deren Schraubenschaft den Befestigungsansatz der Pflugtragkörpers 7 durchsetzt und auf die eine Mutter 12 geschraubt ist, und zwar unter Zwischenlage eines Federteils 13, das hier demnach den Schwingungsdämpfer bildet. Im Übrigen ist in Fig. 2 noch das an den Einzelstreichblechkörperstreifen 2.1 anschließende Streichblechvorderteil 4 ersichtlich.

In Fig. 3 ist eine alternative Ausführungsvariante gezeigt. Hier ist ebenfalls wiederum ein Anschlussstück 9 mit dem Einzelstreichblechkörper 2.1 verklebt. Dieses Anschlussstück 9 ist zweimal abgewinkelt und greift mit seinem dem Einzelblechstreifenkörper 2.1 abgewandten Schenkel in ein Gegenstück 14 ein, das seinerseits einen Aufnahmeraum 15 aufweist. Dieses Gegenstück 14 besteht aus einem elastischen Material und bildet mithin den Schwingungsdämpfer.

Dieses Gegenstück ist mit dem Befestigungsansatz des Pflugtragkörpers 7 verklebt, der seinerseits noch an dem Einzelstreichblechstreifkörper 2.1 und dem Streichblechvorderteil 4 anliegt.

## Patentansprüche

1. Pflugkörper (1) mit einem Streichblech (2, 2.1) in Streifenkörperausbildung (2.1), das mittels zweier beabstandet zueinander angeordneten, am Streichblech (2, 2.1) angeklebten Befestigungselementen (8) an einem Pflugtragkörper (7) gehaltert ist, wobei die Befestigungselemente (8) Schwingungsdämpfer (11, 13, 14) aufweisen und wobei das Streichblech (2, 2.1) unter Zwischenlage dieser Schwingungsdämpfer (11,13, 14) an dem Pflugtragkörper (7) festgelegt ist.

2. Pflugkörper nach Anspruch 1, **dadurch gekennzeichnet, dass** die Schwingungsdämpfer als Federelement (13) ausgebildet sind.

3. Pflugkörper nach Anspruch 1, **dadurch gekennzeichnet, dass** die Schwingungsdämpfer als Zwischenlageteile (11) aus einem elastischen Material ausgebildet sind.

4. Pflugkörper nach einem der Ansprüche 1 bis 3, **dadurch gekennzeichnet, dass** die Befestigungselemente (8) jeweils ein an dem Streichblech angeklebtes Anschlussstück (9) aufweisen, über das das Streichblech (2, 2.1) an dem Pflugtragkörper (7) unter Zwischenlage der Schwingungsdämpfer (11, 13, 14) festgelegt ist.

5. Pflugkörper nach Anspruch 4, **dadurch gekennzeichnet, dass** das Anschlussstück eine Schraube-Mutter-Verbindung (13) mit einem Zwischenlage ist, wobei zwischen Pflugtragkörper (7) und Mutter (13) ein Federteil (13) als Schwingungsdämpfer vorgesehen ist.

6. Pflugkörper nach Anspruch 4, **dadurch gekennzeichnet, dass** das Anschlussstück (9) einen Aufnahmeraum (10) aufweist, in den ein Befestigungsansatz des Pflugtragkörpers (7) unter Zwischenlage des Schwingungsdämpfers (11) einsteckbar ist.

7. Pflugkörper nach Anspruch 4, **dadurch gekennzeichnet, dass** das Anschlussstück (9) mit einem Gegenstück (14) zusammenwirkt aus einem elastischen Material, das an dem Pflugtragkörper (7) befestigt ist.

8. Pflugkörper nach Anspruch 7, **dadurch gekennzeichnet, dass** das Gegenstück (14) einen Aufnahmeraum (15) aufweist, in den ein Ende des Anschlussstückes (9) einführbar ist.

9. Pflugkörper nach Anspruch 7 oder 8, **dadurch gekennzeichnet, dass** das Anschlussstück (9) zumindest zweifach abgewinkelt ausgebildet ist.

## Claims

1. Plough body (1) having a mouldboard (2, 2.1) configured as a slatted body (2.1), which is held on a plough supporting body (7) by means of two fastening elements (8) that are arranged in a manner spaced apart from one another and are adhesively bonded to the mouldboard (2, 2.1), wherein the fastening elements (8) have vibration dampers (11, 13, 14) and wherein the mouldboard (2, 2.1) is secured to the plough supporting body (7) with these vibration dampers (11, 13, 14) interposed.

2. Plough body according to Claim 1, **characterized in that** the vibration dampers are configured as spring elements (13).

3. Plough body according to Claim 1, **characterized in that** the vibration dampers are configured as interposed parts (11) made of an elastic material.

4. Plough body according to one of Claims 1 to 3, **characterized in that** the fastening elements (8) each have a connecting piece (9) adhesively bonded to the mouldboard, the mouldboard (2, 2.1) being secured to the plough supporting body (7) via said connection piece (9) with the vibration dampers (11, 13, 14) interposed.

5. Plough body according to Claim 4, **characterized in that** the connection piece is a screw/nut connection (13) with an interlayer, wherein a spring part (13) is provided as vibration damper between the plough supporting body (7) and nut (13).

6. Plough body according to Claim 4, **characterized in that** the connection piece (9) has a receiving space (10) into which a fastening attachment of the plough supporting body (7) is able to be plugged with the vibration damper (11) interposed.

7. Plough body according to Claim 4, **characterized in that** the connection piece (9) cooperates with a counterpart (14) made of an elastic material, which is fastened to the plough supporting body (7).

8. Plough body according to Claim 7, **characterized in that** the counterpart (14) has a receiving space (15) into which one end of the connection piece (9) is insertable.

9. Plough body according to Claim 7 or 8, **characterized in that** the connection piece (9) is configured in a manner bent at least twice.

## Revendications

1. Corps de charrue (1) présentant un versoir (2, 2.1) configuré comme corps (2.1) en ruban maintenu sur un corps (7) de support de charrue au moyen de deux éléments de fixation (8) collés sur le versoir (2, 2.1) et disposés à distance l'un de l'autre, les éléments de fixation (8) présentant des amortisseurs de vibrations (11, 13, 14) et le versoir (2, 2.1) étant fixé sur le corps (7) de support de charrue par l'intermédiaire de ces amortisseurs de vibrations (11, 13, 14).

2. Corps de charrue selon la revendication 1, **caractérisé en ce que** les amortisseurs de vibrations sont configurés comme éléments élastiques (13).

3. Corps de charrue selon la revendication 1, **caractérisé en ce que** les amortisseurs de vibrations sont configurés comme pièces intercalaires (11) en matériau élastique.

4. Corps de charrue selon l'une des revendications 1 à 3, **caractérisé en ce que** les éléments de fixation (8) présentent chacun une pièce de raccordement (9) collée sur le versoir et par l'intermédiaire duquel le versoir (2, 2.1) est fixé sur le corps (7) de support de charrue par l'intermédiaire de l'amortisseur de vibrations (11, 13, 14).

5. Corps de charrue selon la revendication 4, **caractérisé en ce que** la pièce de raccordement est une liaison (13) à vis et écrou dotée d'une couche intermédiaire, une pièce élastique (13) servant d'amortisseur de vibrations étant prévue entre le corps (7) de support de charrue et l'écrou (13).

6. Corps de charrue selon la revendication 4, **caractérisé en ce que** la pièce de raccordement (9) présente un espace de réception (10) dans lequel un appendice de fixation du corps (7) de support de charrue peut être enfiché en intercalant l'amortisseur de vibrations (11).

7. Corps de charrue selon la revendication 4, **caractérisé en ce que** la pièce de raccordement (9) coopère avec une pièce complémentaire (14) en matériau élastique fixée sur le corps (7) de support de charrue.

8. Corps de charrue selon la revendication 7, **caractérisé en ce que** la pièce complémentaire (14) présente un espace de réception (15) dans lequel une extrémité de la pièce de raccordement (9) peut être insérée.

9. Corps de charrue selon les revendications 7 ou 8, **caractérisé en ce que** la pièce de raccordement (9) est coudée au moins deux fois.
